# EUROPÄISCHE PATENTSCHRIFT

(11) **EP 2 185 313 B1**
(45) Veröffentlichungstag und Bekanntmachung des Hinweises auf die Patenterteilung: **08.12.2010**
(21) Anmeldenummer: 08787197.6
(22) Anmeldetag: 13.08.2008
(51) Int. Cl.: B23Q 1/01, B23Q 11/00, B23Q 11/10

(54) **WERKZEUGMASCHINENVORRICHTUNG, WERKZEUGMASCHINE UND VERFAHREN ZUR HERSTELLUNG EINER WERKZEUGMASCHINENVORRICHTUNG**
MACHINE TOOL DEVICE, MACHINE TOOL AND METHOD FOR PRODUCING A MACHINE TOOL DEVICE
DISPOSITIF DE MACHINE-OUTIL, MACHINE-OUTIL ET PROCÉDÉ POUR PRODUIRE UN DISPOSITIF DE MACHINE-OUTIL

(30) Priorität: 07.09.2007 DE 102007044289
(43) Veröffentlichungstag der Anmeldung: 19.05.2010
(73) Patentinhaber: MAG IAS GmbH, 73033 Göppingen (DE)
(72) Erfinder: MEIDAR, Moshe Israel, New York, New York 10022 (US); HORN, Wolfgang, 73035 Göppingen (DE); GUNZENHAUSER, Markus, 89558 Böhmenkirch (DE); WAGNER, Mathias, 71254 Ditzingen (DE)
(74) Vertreter: Hoeger, Stellrecht & Partner Patentanwälte
(86) Internationale Anmeldenummer: PCT/EP2008/060646
(87) Internationale Veröffentlichungsnummer: WO 2009/033910

(56) Entgegenhaltungen:
- EP-A- 1 317 993
- WO-A-96/34720
- US-A- 4 539 876
- US-A1- 2004 047 700
- US-A1- 2005 031 427

## Beschreibung

Die vorliegende Erfindung betrifft eine Werkzeugmaschinenvorrichtung, umfassend ein Maschinenbett mit mindestens einem Aufnahmeraum zur Aufnahme von bei der Bearbeitung eines Werkstücks entstehenden Spänen und mindestens eine Abführeinrichtung zum Abführen der Späne aus dem Aufnahmeraum.

Das Maschinenbett einer solchen Werkzeugmaschinenvorrichtung dient zur Anordnung fester oder beweglicher Teile einer Werkzeugmaschine, beispielsweise einer Werkstückträgereinrichtung und/oder einer Werkzeugträgereinrichtung. Der Aufnahmeraum des Maschinenbetts dient zur Aufnahme von bei der Bearbeitung eines Werkstücks entstehenden Spänen. Von dort aus können die Späne mit Hilfe der Abführeinrichtung aus dem Aufnahmeraum abgeführt werden.

Aus der US 4,955,770 ist ein Bett für eine Werkzeugmaschine bekannt, welches eine Lochstruktur umfasst, so dass Späne oder Öl von dem Bett von einem Arbeitsbereich in ein Loch fallen können.

Aus der US 5,113,558 ist eine Vorrichtung zum Spülen von Spänen bekannt.

Aus der DE 101 44 028 A1 ist ein Maschinengestell in Modulbauweise bekannt.

Aus der DE 100 41 355 A1 ist eine Werkzeugmaschine zur spanenden Metallbearbeitung mit einem unter dem Arbeitsbereich angeordneten Entsorgungssystem für Späne und Flüssigkeiten bekannt. Das Entsorgungssystem umfasst eine Wanne mit einer Querrinne, einen in der Querrinne angeordneten Späneförderer mit einem wendelförmigen Förderelement, einen Flüssigkeitssammler an der einen Seitenwand der Wanne und einen an ihrer anderen Seitenwand am Austragsende des Späneförderers angeordneten Späneaustrag. Im Innenraum des wendelförmigen Förderelements ist ein langgestrecktes Siebelement angeordnet, dass sich zumindest über eine Teillänge des Förderelements erstreckt und am Flüssigkeits-Sammler ausmündet.

Aus der DE 295 18 984 U1 ist eine Spänefördereinrichtung zum Ausbringen von bei der spanabhebenden Fertigung eines Werkstücks anfallenden Spänen aus einer spanabhebenden Fertigungsmaschine mit einem in der Fertigungsmaschine integriert angeordneten Förderkanal, der im Arbeitsbereich der Fertigungsmaschine eine Auffangvorrichtung für die anfallenden Späne aufweist, durch welche die Späne dem Förderkanal zugeführt werden, bekannt. Im Bereich der Auffangvorrichtung der Spänefördereinrichtung ist eine Spänezerkleinerungseinrichtung vorgesehen, mittels welcher die bei der Werkstückbearbeitung eines Werkstücks entstehenden Späne zerkleinerbar sind, bevor sie in den Förderkanal zum Ausbringen aus der Fertigungsmaschine gelangen.

Aus der EP 1 317 993A ist eine Werkzeugmaschinen vorrichtung gemäß dem Oberbegriff des Anspruchs 1 und ein Verfahren gemäß dem Oberbegriff des Anspruchs 15 bekannt.

Der vorliegenden Erfindung liegt die Aufgabe zugrunde, eine Werkzeugmaschinenvorrichtung der eingangs genannten Art bereitzustellen, welche flexibel einsetzbar ist.

Diese Aufgabe wird bei einer Werkzeugmaschinenvorrichtung der eingangs genannten Art dadurch gelöst, dass die mindestens eine Abführeinrichtung mindestens eine Fördereinrichtung zum Fördern der Späne aus dem Aufnahmeraum und/oder mindestens eine Spüleinrichtung zum Spülen der Späne aus dem Aufnahmeraum und/oder mindestens eine Absaugeinrichtung zum Absaugen der Späne aus dem Aufnahmeraum umfasst, und dass das Maschinenbett mindestens einen ersten Maschinenbettabschnitt zur Anordnung der Fördereinrichtung, mindestens einen zweiten Maschinenbettabschnitt zur Anordnung der Spüleinrichtung und mindestens einen dritten Maschinenbettabschnitt zur Anordnung der Absaugeinrichtung umfasst, so dass das Maschinenbett wahlweise mit der Fördereinrichtung und/oder der Spüleinrichtung und/oder der Absaugeinrichtung ausrüstbar ist.

Die erfindungsgemäße Werkzeugmaschinenvorrichtung ermöglicht es, ein Maschinenbett wahlweise mit einer Fördereinrichtung und/oder einer Spüleinrichtung und/oder mit einer Absaugeinrichtung auszurüsten. Auf diese Weise kann mit Hilfe desselben Maschinenbetts eine Werkzeugmaschinenvorrichtung bereitgestellt werden, die sich wahlweise für eine Werkzeugmaschine zur Trockenbearbeitung und/oder zur Nassbearbeitung eines Werkstücks vorbereiten lässt, indem eine entsprechende Abführeinrichtung zum Abführen der Späne aus dem Aufnahmeraum ausgewählt und diese an einem entsprechenden Maschinenbettabschnitt des Maschinenbetts angeordnet wird.

Die erfindungsgemäße Werkzeugmaschinenvorrichtung ermöglicht es darüber hinaus, ein Maschinenbett auch mit mehreren, unterschiedlichen Abführeinrichtungen auszustatten. Beispielsweise kann das Abführen der Späne aus dem Aufnahmeraum mit Hilfe einer mechanisch wirkenden Fördereinrichtung unterstützt werden, indem das Maschinenbett zusätzlich mit einer Spüleinrichtung und/oder einer Absaugeinrichtung ausgerüstet wird.

Bei Ausrüstung des Maschinenbetts mit einer Fördereinrichtung eignet sich die Werkzeugmaschinenvorrichtung sowohl für eine trockene als auch für eine nasse Bearbeitung eines Werkstücks. Bei Ausrüstung des Maschinenbetts mit einer Spüleinrichtung eignet sich die Werkzeugmaschinenvorrichtung besonders gut für eine Nassbearbeitung eines Werkstücks. Bei Ausrüstung des Maschinenbetts mit einer Absaugeinrichtung eignet sich die Werkzeugmaschinenvorrichtung besonders gut für eine Trockenbearbeitung eines Werkstücks.

In vorteilhafter Weise umfasst der erste Maschinenbettabschnitt den Aufnahmeraum. Hierdurch kann die Fördereinrichtung in dem Aufnahmeraum angeordnet werden, so dass sie die Späne aus dem Aufnahmeraum heraus fördern kann.

Insbesondere ist es vorteilhaft, wenn der Aufnahmeraum rinnenförmig ist. Dies ermöglicht ein einfaches Einführen der an einem Werkstück entstehenden Späne in den Aufnahmeraum. Außerdem ermöglicht ein rinnenförmiger Aufnahmeraum ein einfaches Abführen der Späne aus dem Aufnahmeraum heraus.

Besonders bevorzugt ist es, wenn eine bodenseitige Begrenzung des Aufnahmeraums gegenüber einer Aufstellebene des Maschinenbetts geneigt ist. Mit Hilfe dieser Neigung kann ein Abtransport der Späne aus dem Aufnahmeraum heraus unterstützt werden.

Nach einer Ausführungsform der Erfindung umfasst der erste Maschinenbettabschnitt mindestens einen Durchlass, mittels welchem der Aufnahmeraum mit einer Umgebung der Werkzeugmaschinenvorrichtung verbunden ist. Ein solcher Durchlass ermöglicht es, die Späne aus dem Aufnahmeraum heraus in die Umgebung der Werkzeugmaschinenvorrichtung zu transportieren. Der Durchlass ermöglicht außerdem eine besonders einfache Kopplung der Fördereinrichtung mit einer Antriebseinrichtung.

In vorteilhafter Weise ist die Fördereinrichtung über den Durchlass in den Aufnahmeraum einführbar. Dies ermöglicht eine besonders einfache Montage der Werkzeugmaschinenvorrichtung.

Bevorzugt ist es, wenn die Fördereinrichtung mindestens eine Förderschnecke umfasst. Eine solche Förderschnecke ermöglicht einen kontinuierlichen und zuverlässigen Abtransport der Späne aus dem Aufnahmeraum.

Günstig ist es ferner, wenn die Fördereinrichtung mindestens ein Förderband umfasst. Mit Hilfe einer solchen Fördereinrichtung kann eine große Spanabtransportfläche bereitgestellt werden.

In vorteilhafter Weise umfasst die Werkzeugmaschinenvorrichtung mindestens eine Antriebseinrichtung zum Antrieb der Fördereinrichtung, welche insbesondere an dem Maschinenbett anordenbar ist. Dies ermöglicht einen kompakten Aufbau der Werkzeugmaschinenvorrichtung.

Bevorzugt ist es, wenn der zweite Maschinenbettabschnitt mindestens ein Wandelement umfasst, welches den Aufnahmeraum begrenzt. Auf diese Weise kann die Spüleinrichtung in unmittelbarer Nähe zu den aus dem Aufnahmeraum herauszuspülenden Spänen angeordnet werden, so dass eine besonders gute Spülwirkung erzielt werden kann.

Vorteilhaft ist es ferner, wenn mittels des Wandelements das Maschinenbett versteift ist. Ein solches Wandelement dient gleichzeitig zur Begrenzung des Aufnahmeraums und zur Versteifung einer tragenden Struktur des Maschinenbetts.

In vorteilhafter Weise umfasst die Spüleinrichtung mindestens eine Düse zum Einbringen mindestens eines Spülfluids in den Aufnahmeraum. Mit Hilfe einer solchen Düse kann ein Spülfluidstrom erzeugt werden, welcher ein Schwemmen des Aufnahmeraums zum Abtransport der Späne ermöglicht.

Insbesondere ist das Spülfluid eine Flüssigkeit und/oder Druckluft.

Bevorzugt ist es ferner, wenn der dritte Maschinenbettabschnitt den Aufnahmeraum umfasst. Auf diese Weise lassen sich zumindest Teile der Absaugeinrichtung in dem Aufnahmeraum anordnen.

Bevorzugt ist es, wenn der dritte Maschinenbettabschnitt einen in das Maschinenbett integrierten Zusatzraum umfasst. Auf diese Weise kann mit Hilfe des Maschinenbetts ein zusätzlicher Raum zur Anordnung der Absaugeinrichtung oder von Teilen der Absaugeinrichtung bereitgestellt werden.

Vorzugsweise umfasst die Werkzeugmaschinenvorrichtung mindestens einen Durchtritt zur Verbindung des Aufnahmeraums und des Zusatzraums. Ein solcher Durchtritt ermöglicht eine fluidwirksame Verbindung zwischen dem Aufnahmeraum und dem Zusatzraum, so dass durch den Durchtritt hindurch Späne aus dem Aufnahmeraum in den Zusatzraum abtransportiert werden können.

Bevorzugt ist es, wenn der Aufnahmeraum und der Zusatzraum sich in zueinander parallelen Richtungen erstrecken. Dies ermöglicht eine Platz sparende Anordnung der beiden Räume.

Besonders bevorzugt ist es, wenn der Aufnahmeraum bezogen auf die Schwerkraftrichtung oberhalb des Zusatzraums angeordnet ist. Auf diese Weise wird ein Absaugen der Späne aus dem Aufnahmeraum in den Zusatzraum durch Wirken der Schwerkraft unterstützt.

Vorzugsweise umfasst die Absaugeinrichtung mindestens ein in den Aufnahmeraum einsetzbares Spanführungselement. Ein solches Spanführungselement ermöglicht die Vorgabe einer Führungsbahn für einen in den Aufnahmeraum fallenden Span und/oder für einen aus dem Aufnahmeraum abzusaugenden Span.

In vorteilhafter Weise ist das Spanführungselement trichterförmig. Dies ermöglicht die Bereitstellung einer großen Spaneinführungsfläche und einer kleinen Spanabführungsfläche. Die Verkleinerung der Spanabführungsfläche hat den Vorteil, dass im Bereich der Spanabführfläche eine höhere Saugleistung bereitgestellt werden kann.

Günstig ist es ferner, wenn die Absaugeinrichtung mindestens eine mit dem Aufnahmeraum in Fluidverbindung stehende Absaugleitung umfasst. Eine solche Leitung ermöglicht einen Transport der abzuführenden Späne entlang des Maschinenbetts. Insbesondere ist es vorteilhaft, wenn die Absaugleitung in dem Zusatzraum des Maschinenbetts angeordnet ist.

Wenn die Querschnittsfläche der Absaugleitung in einer Spanabsaugrichtung gesehen zunimmt, ist es möglich, entlang der Absaugleitung an unterschiedlichen Absaugstellen gleiche Saugleistungen bereitzustellen.

Vorzugsweise ist das Maschinenbett aus mindestens einem Gussteil hergestellt. Auf diese Weise können Teile des Maschinenbetts, beispielsweise eine Aufnahmebegrenzung und/oder eine Begrenzung des Zusatzraums, in einfacher Weise hergestellt werden.

Die Erfindung betrifft ferner eine Werkzeugmaschine mit einer vorstehend beschriebenen Werkzeugmaschinenvorrichtung. Die Werkzeugmaschine ist insbesondere ein Bearbeitungszentrum.

Bevorzugt ist es, wenn der mindestens eine Aufnahmeraum mindestens so lang ist wie ein Arbeitsraum der Werkzeugmaschine. Dies ermöglicht eine zuverlässige Bearbeitung von bei der Bearbeitung eines Werkstücks entstehenden Spänen unabhängig von der Positionierung des Werkstücks relativ zu dem Aufnahmeraum.

Nach einer Ausführungsform der Erfindung umfasst die Werkzeugmaschine eine Mehrzahl von an dem Maschinenbett beweglich geführten Schlitten zur Halterung mindestens eines Werkstücks und/oder mindestens eines Werkzeugs, wobei jedem Schlitten mindestens ein eigener Aufnahmeraum zugeordnet ist und wobei jedem Aufnahmeraum mindestens eine eigene Abführeinrichtung zugeordnet ist. Dies ermöglicht eine unabhängige Abführung der Späne aus jedem der Aufnahmeräume.

Die Erfindung betrifft ferner ein Verfahren zur Herstellung einer Werkzeugmaschinenvorrichtung, umfassend ein Maschinenbett mit mindestens einem Aufnahmeraum zur Aufnahme von bei der Bearbeitung eines Werkstücks entstehenden Spänen.

Der Erfindung liegt die weitere Aufgabe zugrunde, ein Verfahren zur Herstellung einer flexibel einsetzbaren Werkzeugmaschinenvorrichtung anzugeben.

Diese Aufgabe wird bei einem Verfahren zur Herstellung einer Werkzeugmaschinenvorrichtung mit den Merkmalen des Oberbegriffs des Anspruchs 29 erfindungsgemäß dadurch gelöst, dass mindestens eine Fördereinrichtung zum Fördern der Späne aus dem Aufnahmeraum, mindestens eine Spüleinrichtung zum Spülen der Späne aus dem Aufnahmeraum und mindestens eine Absaugeinrichtung zum Absaugen der Späne aus dem Aufnahmeraum bereitgestellt wird, und dass das Maschinenbett wahlweise mit der Fördereinrichtung und/oder der Spüleinrichtung und/oder der Absaugeinrichtung ausgerüstet wird.

Die Vorteile des erfindungsgemäßen Verfahrens sind bereits vorstehend im Zusammenhang mit den Ausgestaltungen der erfindungsgemäßen Vorrichtung erläutert worden.

Weitere Merkmale und Vorteile der Erfindung sind Gegenstand der nachfolgenden Beschreibung und der zeichnerischen Darstellung bevorzugter Ausführungsbeispiele.

In den Zeichnungen zeigen:
- Figur 1: eine perspektivische Ansicht einer Ausführungsform einer Werk- zeugmaschine mit einem Maschinenbett;
- Figur 2: eine perspektivische Ansicht des Maschinenbetts aus Figur 1;
- Figur 3: eine der Figur 2 entsprechende Ansicht aus einer rückwärtigen Perspektive;

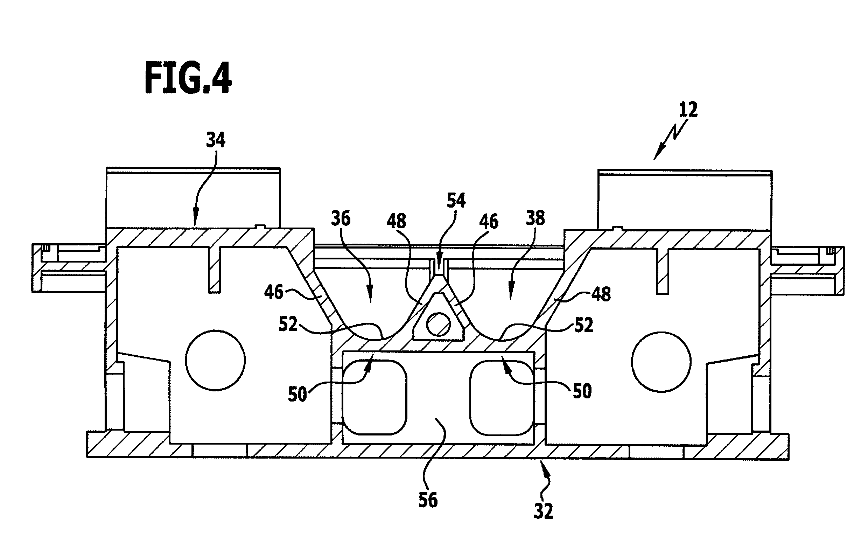

- Figur 4: eine geschnittene Ansicht des Maschinenbetts aus Figur 2 gemäß einer dort mit IV bezeichneten Schnittebene;
- Figur 5: eine perspektivische Ansicht einer Ausführungsform einer Werk- zeugmaschinenvorrichtung mit einem Maschinenbett und mit einer Abführeinrichtung;
- Figur 6: eine perspektivische Ansicht einer weiteren Ausführungsform einer Werkzeugmaschinenvorrichtung mit einem Maschinenbett und mit einer Abführeinrichtung;
- Figur 7: eine perspektivische Ansicht der Werkzeugmaschinenvorrichtung gemäß Figur 6 gemäß einer dort mit VII bezeichneten Schnitt- ebene;
- Figuren 8a bis 8c: geschnittene Seitenansichten drei weiterer Ausführungsformen einer Werkzeugmaschinenvorrichtung; und
- Figuren 9a bis 9d: geschnittene Seitenansichten vier weiterer Ausführungsformen einer Werkzeugmaschinenvorrichtung.

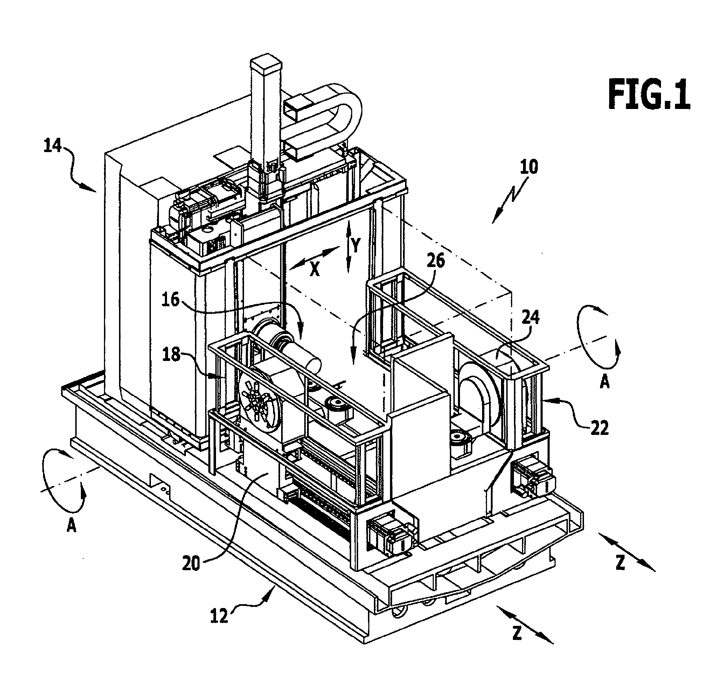

Ein Ausführungsbeispiel einer erfindungsgemäßen Werkzeugmaschine, welche in Figur 1 gezeigt und dort mit 10 bezeichnet ist, umfasst ein Maschinenbett 12. Mit Hilfe des Maschinenbetts 12 ist die Werkzeugmaschine 10 auf einer Unterlage aufgestellt.

An dem Maschinenbett 12 ist ein Maschinengestell 14 angeordnet, welches in Form eines Ständers oder Portals ausgebildet ist.

Die Werkzeugmaschine 10 umfasst eine Werkzeugträgereinrichtung 16, welche an dem Maschinengestell 14 in einer x-Richtung und in einer hierzu senkrechten γ-Richtung beweglich gelagert und angetrieben ist.

Die Werkzeugmaschine 10 weist ferner eine erste Werkstückträgereinrichtung 18 in Form eines ersten Schlittens 20 sowie eine zweite Werkstückträgereinrichtung 22 in Form eines Schlittens 24 auf.

Die Schlitten 20 und 24 sind entlang einer jeweils zugeordneten z-Achse verschieblich an dem Maschinenbett 12 gelagert und angetrieben.

Ein an der Werkstückträgereinrichtung 20 und/oder der Werkstückträgereinrichtung 22 gehaltenes Werkstück kann mit Hilfe eines an der Werkzeugträgereinrichtung 16 gehaltenen Werkzeugs spanend bearbeitet werden. Diese Bearbeitung erfolgt in einem in Schwerkraftrichtung oberhalb des Maschinenbetts 12 angeordneten Arbeitsraum 26.

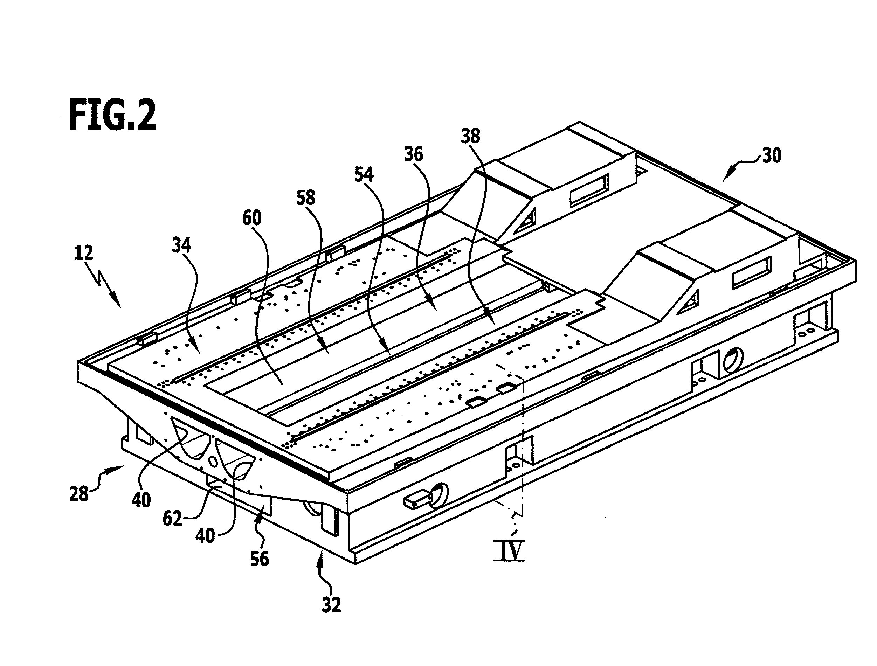

Das Maschinenbett 12 der Werkzeugmaschine 10 ist in Figur 2 dargestellt. Das Maschinenbett 12 erstreckt sich zwischen einem vorderen Ende 28 und einem rückwärtigen Ende 30. Das Maschinenbett 12 weist eine Unterseite 32 auf, welche eine Aufstellebene zur Aufstellung des Maschinenbetts 12 auf eine Unterlage bildet. Ferner weist das Maschinenbett 12 eine Oberseite 34 zur Anordnung des Maschinengestells 14 und der Werkstückträgereinrichtungen 18, 22 (vgl. Figur 1) auf.

Das Maschinenbett 12 weist mindestens einen Aufnahmeraum auf. Das in der Zeichnung dargestellte Maschinenbett 12 umfasst zwei Aufnahmeräume 36 und 38. Die Aufnahmeräume 36 und 38 erstrecken sich jeweils zwischen dem vorderen Ende 28 und dem rückwärtigen Ende 30 des Maschinenbetts 12.

Die Aufnahmeräume 36, 38 münden an dem vorderen Ende 28 des Maschinenbetts 12 jeweils an einem Durchlass 40, mittels welchem die Aufnahmeräume 36, 38 jeweils mit einer Umgebung des Maschinenbetts 12 verbunden sind. Ferner münden die Aufnahmeräume 36 und 38 an dem rückwärtigen Ende 30 des Maschinenbetts 12 an jeweils einem Durchlass 42 zur Verbindung der Aufnahmeräume 36, 38 mit der Umgebung des Maschinenbetts 12.

Die Aufnahmeräume 36, 38 sind rinnenförmig. Die Aufnahmeräume 36, 38 erstrecken sich in zu den z-Richtungen der Werkzeugmaschine 10 parallelen Richtungen. Die Aufnahmeräume 36, 38 sind in einem dem Arbeitsraum 26 der Werkzeugmaschine 10 zugeordneten Bereich nach oben hin offen.

Die Aufnahmeräume 36, 38 sind durch jeweils winklig zueinander stehende Wandelemente 46, 48 begrenzt. Die Wandelemente bilden ein V-förmiges oder U-förmiges Rinnenprofil.

Die Wandelemente 46, 48 gehen in einem Verbindungsbereich 50 ineinander über. Die Verbindungsbereiche 50 bilden auf ihrer den Aufnahmeräumen 36, 38 zugewandten Seite jeweils eine bodenseitige Begrenzung 52 eines Aufnahmeraums 36, 38.

Bevorzugt ist es, wenn die bodenseitige Begrenzung 52 zwischen dem vorderen Ende 28 und dem rückwärtigen Ende 30 des Maschinenbetts 12 gesehen relativ zu einer Aufstellebene des Maschinenbetts 12 geneigt ist. Dies erleichtert den Abtransport von Spänen aus dem Aufnahmeraum 36, 38 in eine Umgebung des Maschinenbetts 12. Die Aufstellebene kann durch die Unterseite 32 des Maschinenbetts 12 oder mit Hilfe separater, nicht dargestellter Aufstellelemente definiert werden. Das Maschinenbett 12 kann beispielsweise mit Hilfe von drei (in der Zeichnung nicht dargestellten) Aufstellelementen aufgestellt werden, um eine Dreipunktaufstellung des Maschinenbetts 12 zu ermöglichen.

Das Wandelement 48 des Aufnahmeraums 36 und das Wandelement 46 des Aufnahmeraums 38 bilden gemeinsam eine Trenneinrichtung 54 zur Trennung der Aufnahmeräume 36 und 38. Die Trenneinrichtung 54 ermöglicht es, in den Aufnahmeräumen 36, 38 enthaltene Späne jeweils separat aus diesen Aufnahmeräumen abzuführen.

Das Maschinenbett 12 weist einen Zusatzraum 56 auf. Der Zusatzraum ist insbesondere im Wesentlichen quaderförmig.

Der Zusatzraum 56 erstreckt sich zwischen dem vorderen Ende 28 und dem rückwärtigen Ende 30 des Maschinenbetts 12. Der Zusatzraum 56 und mindestens einer der Aufnahmeräume 36, 38 erstrecken sich vorzugsweise in zumindest annähernd paralleler Richtung. Bevorzugt ist es ferner, wenn der Zusatzraum 56 in Schwerkraftrichtung unterhalb mindestens eines Aufnahmeraum 36, 38 angeordnet ist.

Das Maschinenbett 12 weist eine Mehrzahl von Maschinenbettabschnitten zur Anordnung unterschiedlicher Abführeinrichtungen zum Abführen von Spänen aus dem mindestens einen Aufnahmeraum 36, 38 auf.

Das Maschinenbett 12 umfasst einen ersten Maschinenbettabschnitt 58. Dieser ist beispielsweise durch mindestens einen Aufnahmeraum 36, 38 gebildet. Der erste Maschinenbettabschnitt dient zur Anordnung einer Fördereinrichtung, mittels welcher Späne mechanisch aus dem Aufnahmeraum förderbar sind.

Das Maschinenbett 12 weist einen zweiten Maschinenbettabschnitt 60 auf. Dieser ist beispielsweise durch mindestens ein Wandelement 46, 48 mindestens eines Aufnahmeraums 36, 38 gebildet. Dieser zweite Maschinenbettabschnitt ermöglicht die Anordnung einer Spüleinrichtung, mittels welcher ein Spülfluid in mindestens einen der Aufnahmeräume 36, 38 eintragbar ist, so dass in dem Aufnahmeraum 36, 38 enthaltene Späne aus diesem herausspülbar sind.

Das Maschinenbett 12 weist ferner einen dritten Maschinenbettabschnitt 62 auf. Der dritte Maschinenbettabschnitt umfasst beispielsweise den Zusatzraum 56 und/oder mindestens einen Aufnahmeraum 36, 38. Der dritte Maschinenbettabschnitt ermöglicht die Anordnung einer Absaugeinrichtung zum Absaugen der Späne aus mindestens einem der Aufnahmeräume 36, 38.

Die genannten Maschinenbettabschnitte 58, 60 und 62 ermöglichen es, das Maschinenbett 12 wahlweise mit einer mechanisch wirkenden Fördereinrichtung und/oder mit einer Spüleinrichtung und/oder mit einer Absaugeinrichtung auszurüsten.

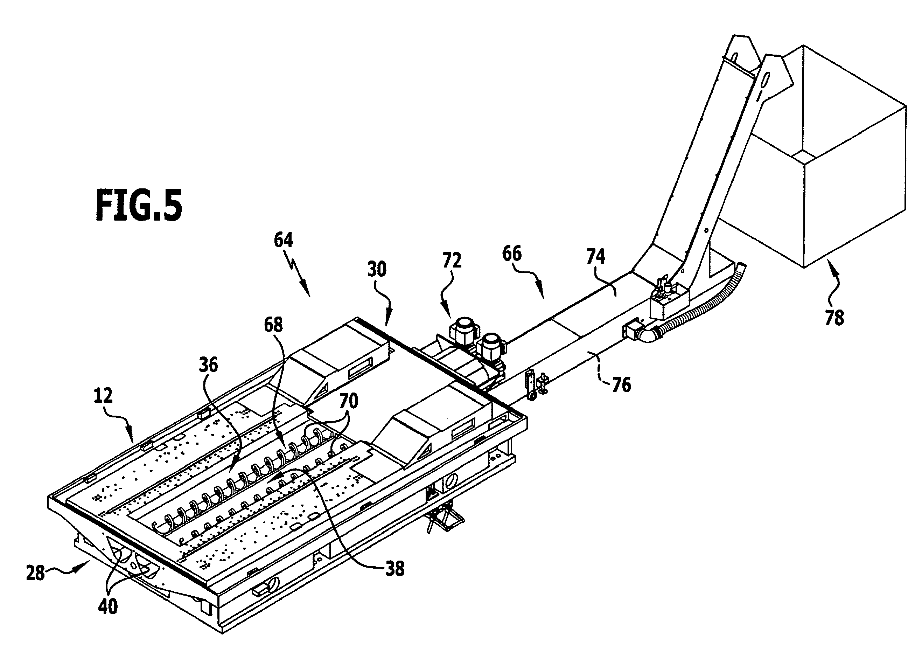

In Figur 5 ist eine Ausführungsform einer mit 64 bezeichneten Werkzeugmaschinenvorrichtung dargestellt, welche das Maschinenbett 12 umfasst sowie eine Abführeinrichtung 66 in Form einer Fördereinrichtung 68.

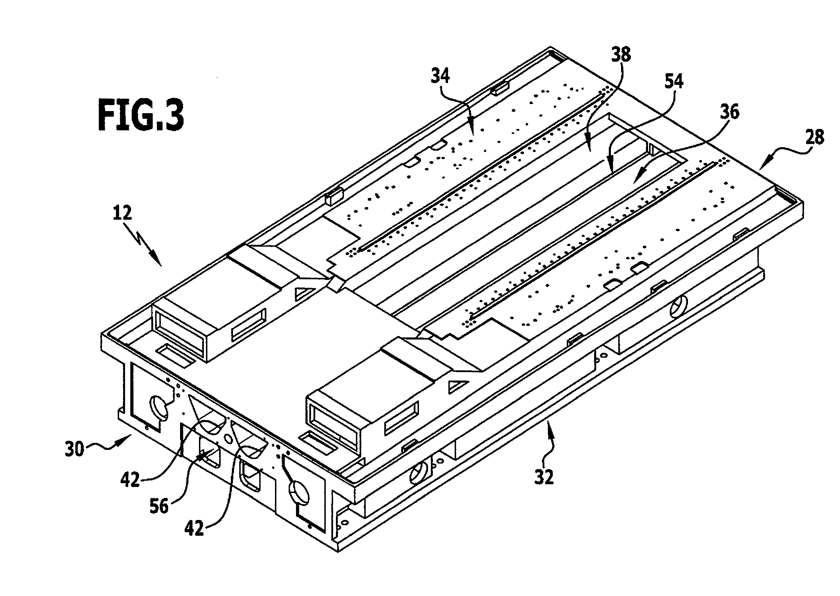

Die Fördereinrichtung 68 umfasst mindestens eine Förderschnecke 70, welche in einem Aufnahmeraum 36, 38 angeordnet ist. Die Förderschnecke 70 erstreckt sich von dem vorderen Ende 28 des Maschinenbetts 12 bis hin zu dem rückwärtigen Ende 30 des Maschinenbetts 12. Dort taucht das rückwärtige Ende der Förderschnecke 70 durch den in Figur 3 dargestellten Durchlass 42 eines Aufnahmeraum 36, 38. An diesem Ende der Förderschnecke 70 ist diese mit Hilfe einer Antriebseinrichtung 72 angetrieben. Die Antriebseinrichtung 72 versetzt die Förderschnecke 70 in Drehung, so dass in einem Aufnahmeraum 36, 38 enthaltene Späne in Richtung auf das rückwärtige Ende 30 des Maschinenbetts 12 gefördert werden.

Der Durchlass 42 jedes Aufnahmeraum 36, 38 steht mit einem vorzugsweise umfangsseitig geschlossenen Gehäuse 74 in Fluidverbindung, so dass die Späne aus dem Aufnahmeraum 36, 38 in das Innere des Gehäuses 74 gelangen können. In dem Gehäuse 74 ist ein Förderband 76 angeordnet, welches aus einem Aufnahmeraum 36, 38 abgeführte Späne abtransportiert, beispielsweise in einen Sammelbehälter 78.

Bei dem in Figur 5 dargestellten Ausführungsbeispiel ist die Antriebseinrichtung 72 an dem rückwärtigen Ende 30 des Maschinenbetts 12 angeordnet. Bei einer alternativen, in der Zeichnung nicht dargestellten Ausführungsform ist es möglich, dass die Antriebseinrichtung 72 an dem vorderen Ende 28 des Maschinenbetts 12 angeordnet ist und dass die Förderschnecken 70 über die Durchlässe 40 mit der Antriebseinrichtung 72 zusammenwirken.

Bei beiden beschriebenen Varianten zur Anordnung der Antriebseinrichtung 72 können die in einem Aufnahmeraum 36, 38 enthaltenen Späne sowohl in einer Förderrichtung in Richtung auf das rückwärtige Ende 30 des Maschinenbetts 12 entsorgt werden als auch in eine Förderrichtung hin zu dem vorderen Ende 28 des Maschinenbetts 12. Die Umkehr der Förderrichtung erfolgt durch ein einfaches Umschalten der Drehrichtung einer Förderschnecke 70 durch entsprechendes Umsteuern der Antriebseinrichtung 72.

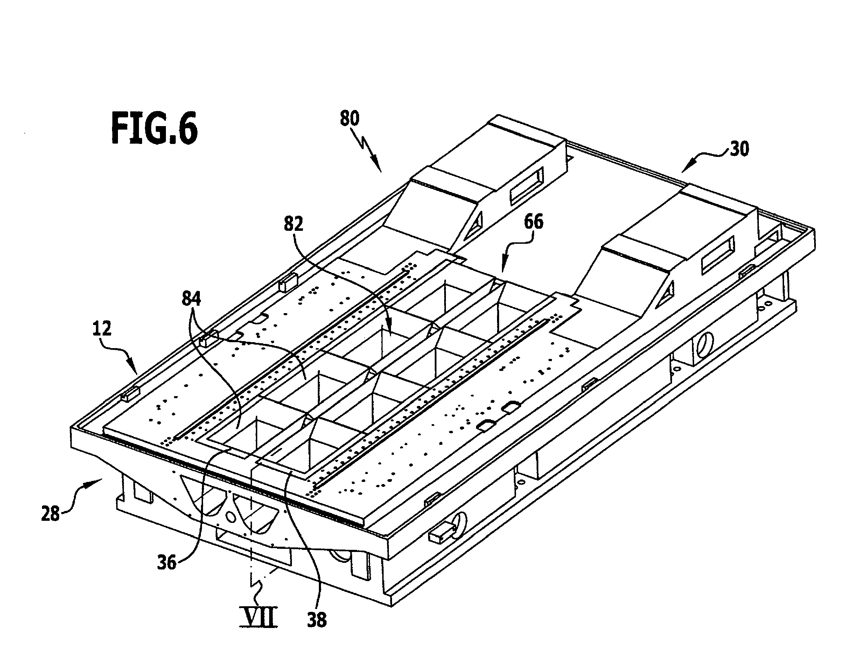

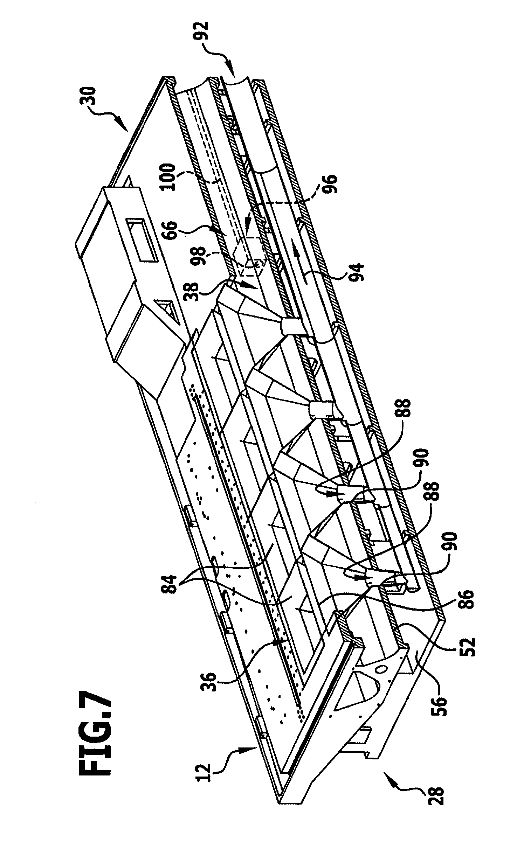

Eine in den Figuren 6 und 7 dargestellte Werkzeugmaschinenvorrichtung 80 umfasst das Maschinenbett 12, welches mit einer Abführeinrichtung 66 in Form einer Absaugeinrichtung 82 ausgerüstet ist.

Die Absaugeinrichtung 82 umfasst mindestens ein in einem Aufnahmeraum 36, 38 anordenbares Spanführungselement 84. Das mindestens eine Spanführungselement 84 ist in dem mindestens einen Aufnahmeraum 36, 38 anordenbar, insbesondere einsetzbar.

Das mindestens eine Spanführungselement 84 ist vorzugsweise trichterförmig ausgebildet, so dass ein großflächiger Eingang 86 für in ein Spanführungselement 84 hineinfallende Späne gebildet wird. Durch die trichterförmige Gestalt eins Spanführungselements 84 verjüngt sich dieses in Richtung auf einen Ausgang 88.

Der Ausgang 88 eines Spanführungselements 84 durchdringt einen in der bodenseitigen Begrenzung 52 eines Aufnahmeraums 36, 38 angeordneten Durchtritt 90. Mit Hilfe des Durchtritts 90 ist eine Verbindung zwischen dem mindestens einen Aufnahmeraum 36, 38 und dem in Schwerkraftrichtung darunter angeordneten Zusatzraum 56 hergestellt.

In dem Zusatzraum 56 ist eine Absaugleitung 92 angeordnet, welche mit einer Mehrzahl von Ausgängen 88 mehrerer Spanführungselemente 84 in fluidwirksamer Verbindung steht.

Die Absaugleitung 92 erweitert sich in einer Spanabsaugrichtung 94 gesehen, so dass an verschiedenen Ausgängen 88 verschiedener Spanführungselemente 84 jeweils dieselbe Saugleistung bereitgestellt werden kann.

Die Absaugleitung 92 mündet an dem hinteren Ende 30 des Maschinenbetts 12, so dass Späne in Richtung auf das hintere Ende 30 abgesaugt werden können. Alternativ hierzu kann die Absaugleitung 92 auch an dem vorderen Ende 28 des Maschinenbetts 12 münden, so dass Späne in Richtung auf das vordere Ende 28 abgesaugt werden können.

Alternativ oder ergänzend zu einer als Fördereinrichtung 68 bzw. alternativ zu einer als Absaugeinrichtung 82 ausgebildeten Abführeinrichtung 66 kann die Abführeinrichtung 66 auch eine Spüleinrichtung 96 umfassen. Eine solche Spüleinrichtung ist in Figur 7 in gestrichelten Linien dargestellt. Diese Spüleinrichtung 96 kann beispielsweise an der bodenseitigen Begrenzung 52 eines Aufnahmeraums 36, 38 positioniert werden.

Die Spüleinrichtung 96 kann - wie in Figur 7 angedeutet - so angeordnet sein, dass ein Spülfluidstrom in Richtung auf das vordere Ende 28 des Maschinenbetts 12 gerichtet ist. Alternativ hierzu kann die Spüleinrichtung 96 so angeordnet sein, dass sie einen in Richtung auf das hintere Ende 30 des Maschinenbetts 12 gerichteten Spülfluidstrom erzeugt.

Vorzugsweise weist die Spüleinrichtung 96 mindestens eine Düse 98 auf, mit der ein Spülfluid in den Aufnahmeraum 36, 38 eintragbar ist, so dass dieser geschwemmt werden kann und in dem Aufnahmeraum enthaltene Späne aus diesem herausgefördert werden können.

Zur Versorgung der Spüleinrichtung 66 mit einem Spülfluid, beispielsweise einer Flüssigkeit und/oder Druckluft, umfasst die Spüleinrichtung 96 eine Spülfluidversorgungsleitung 100. Diese kann von einer externen Spülfluidquelle gespeist sein, welche außerhalb des Maschinenbetts 12 oder auch an diesem befestigt angeordnet sein kann.

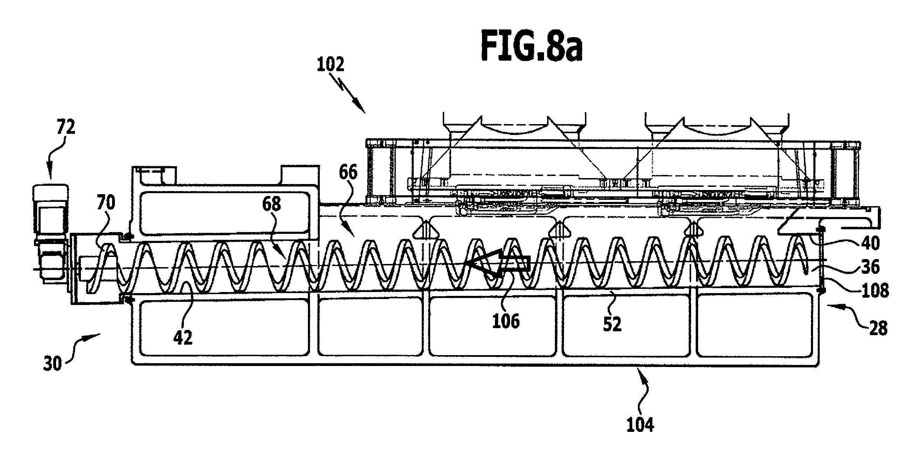

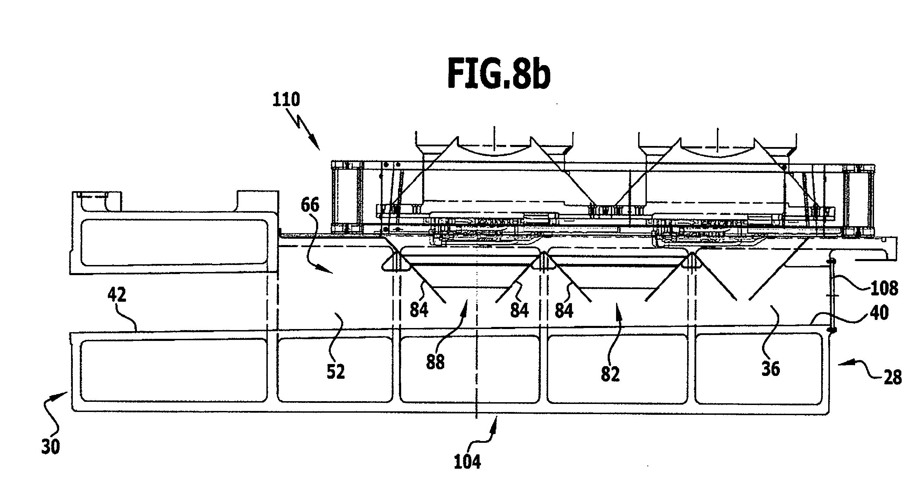

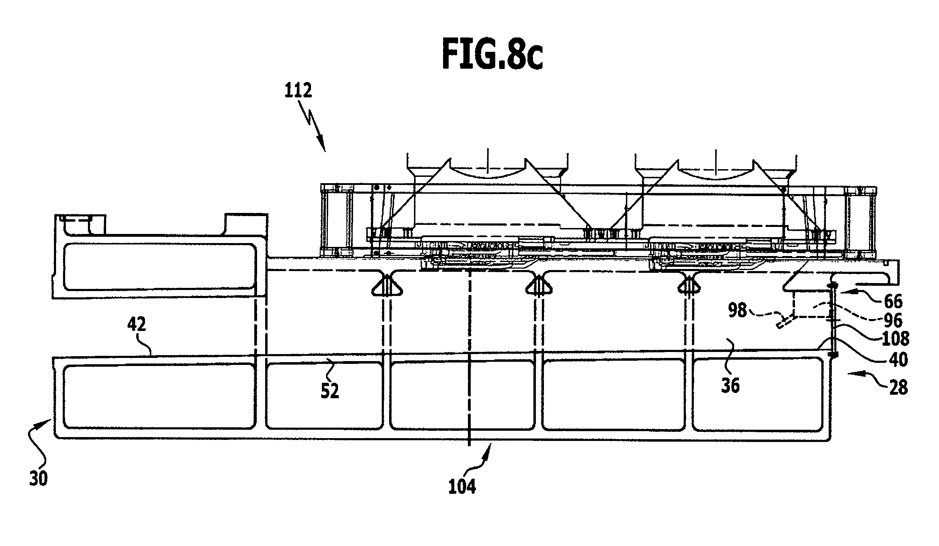

In den Figuren 8a, 8b und 8c sind weitere Ausführungsformen einer Werkzeugmaschinenvorrichtung dargestellt, welche in Figur 8a mit 102, in Figur 8b mit 110 und in Figur 8c mit 112 bezeichnet sind.

Die Werkzeugmaschinenvorrichtungen 102, 110 und 112 weisen ein identisches Maschinenbett 104 auf.

Das Maschinenbett 104 weist einen zu dem Maschinenbett 12 ähnlichen Aufbau auf. Diesbezüglich wird auf die vorstehende Beschreibung zu dem Aufbau und der Funktionsweise des Maschinenbetts 12 Bezug genommen.

Das Maschinenbett 104 unterscheidet sich von dem Maschinenbett 12 dadurch, dass kein separater Zusatzraum 56 zur Anordnung einer Abführeinrichtung 66 vorgesehen ist. Ferner weist das Maschinenbett 104 lediglich einen insbesondere mittig angeordneten Aufnahmeraum 36 auf.

Die bodenseitige Begrenzung 52 des Aufnahmeraums 36 des Maschinenbetts 104 ist in einer in Figur 8a mit 106 angedeuteten Spanförderrichtung 106 bezogen auf die Schwerkraftrichtung nach unten geneigt. Dies erleichtert den Abtransport von in dem Aufnahmeraum 36 enthaltenen Spänen mit Hilfe der Abführeinrichtung 66.

Die in Figur 8a dargestellte Werkzeugmaschinenvorrichtung 102 ist mit einer Abführeinrichtung 66 in Form einer Fördereinrichtung 68 ausgerüstet. Der Spanabtransport erfolgt in Richtung 106 auf das rückwärtige Ende 30 des Maschinenbetts 104. Das dem vorderen Ende 28 des Maschinenbetts 104 zugewandte Ende des Aufnahmeraums 36 ist mit Hilfe einer Abdeckung 108 verschlossen.

Die in Figur 8b dargestellte Werkzeugmaschinenvorrichtung 110 unterscheidet sich von der Werkzeugmaschinenvorrichtung 102 dadurch, dass sie eine Abführeinrichtung 66 in Form einer Absaugeinrichtung 82 aufweist. Die Absaugeinrichtung 82 umfasst eine Mehrzahl von in dem Aufnahmeraum 36 angeordneten, trichterförmigen Spanführungselementen 84.

Im Unterschied zu der mit Bezug auf Figuren 6 und 7 dargestellten Ausführungsform einer Absaugeinrichtung 82 der Werkzeugmaschinenvorrichtung 80 münden die Ausgänge 88 der Spanführungselemente 84 nicht in einem Zusatzraum 56 bzw. in einer Absaugleitung 92, sondern in dem Aufnahmeraum 36.

Aus dem Aufnahmeraum 36 zu entsorgende Späne können somit über den Durchlass 42 am rückwärtigen Ende 30 des Maschinenbetts 104 abgesaugt werden. Alternativ hierzu können die Späne auch über den Durchlass 40 an dem vorderen Ende des Maschinenbetts 104 abgesaugt werden, wenn in diesem Bereich keine Abdeckung 108 vorgesehen ist.

Bei der in Figur 8c dargestellten Ausführungsform einer Werkzeugmaschinenvorrichtung 112 ist eine Abführeinrichtung 66 in Form einer Spüleinrichtung 96 vorgesehen. Diese ist in dem Aufnahmeraum 36 im Bereich des Durchlasses 40 des Maschinenbetts 104 angeordnet. Die Spüleinrichtung 96 umfasst vorzugsweise mindestens eine Düse 98 zum Eintrag eines Spülfluids in den Aufnahmeraum 36.

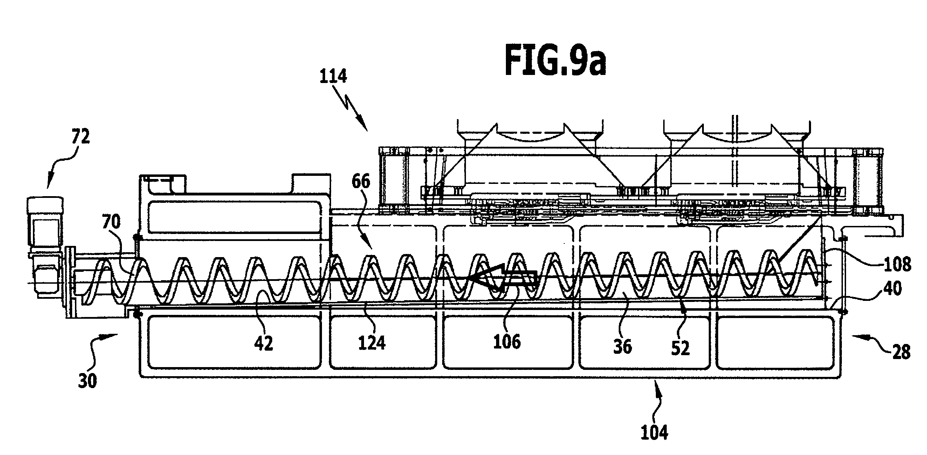

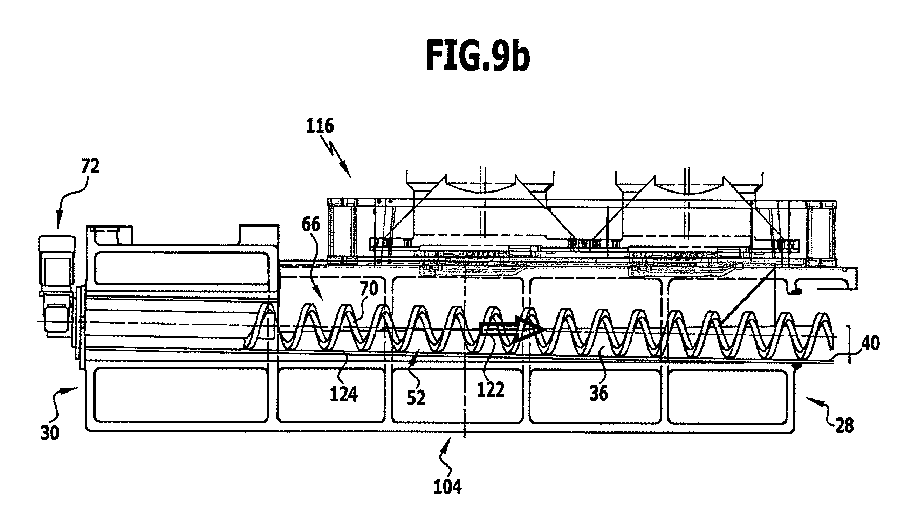

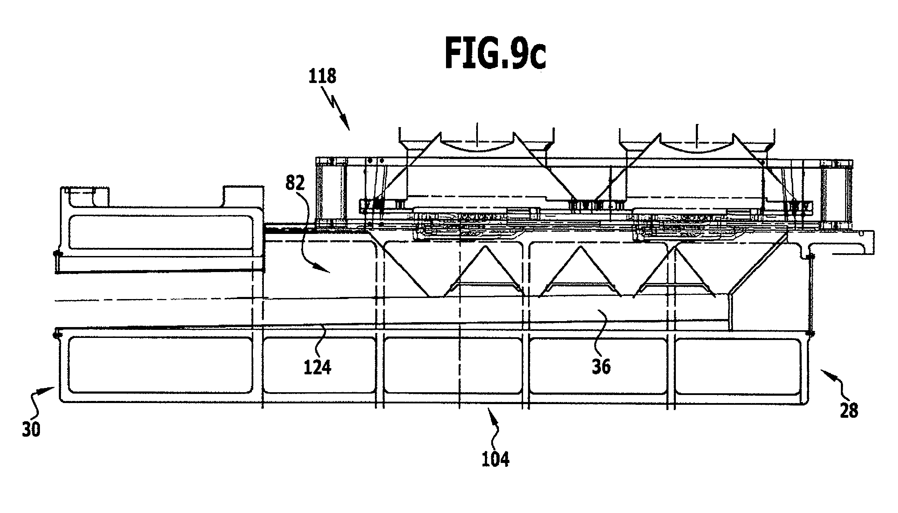

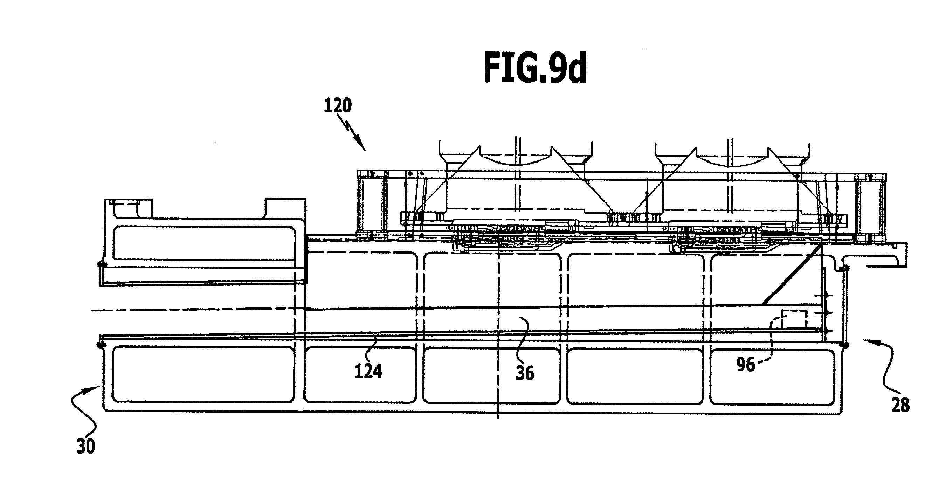

Die in den Figuren 9a, 9b, 9c und 9d dargestellten Werkzeugmaschinenvorrichtungen 114, 116, 118 und 120 unterscheiden sich von den in Bezug auf Figuren 8a bis 8c dargestellten Werkzeugmaschinenvorrichtungen 102, 110 und 112 dadurch, dass der Aufnahmeraum 36 nicht durch Teile der Wandstruktur des Maschinenbetts 104 begrenzt sind, sondern mit Hilfe hierzu separater Begrenzungselemente 124. Diese sind beispielsweise als Blechteile ausgebildet. Sie bilden zumindest eine bodenseitige Begrenzung 52 eines Aufnahmeraums 36.

Mit Hilfe der separaten Begrenzungselemente 124 ist es möglich, die Neigung der bodenseitigen Begrenzung 52 eines Aufnahmeraums 36 zu variieren.

Bei der in Figur 9a dargestellten Werkzeugmaschinenvorrichtung 114 ist die bodenseitige Begrenzung 52 von einem vorderen Ende 28 hin zu einem rückwärtigen Ende 30 des Maschinenbetts 104 in Spanförderrichtung 106 nach unten geneigt.

Bei der in Figur 9b dargestellten Ausführungsform einer Werkzeugmaschinenvorrichtung 116 ist die Spanförderrichtung 122 umgekehrt zu der Spanförderrichtung 106. Dementsprechend weist zumindest die bodenseitige Begrenzung 52 des Aufnahmeraums 36 der Werkzeugmaschinenvorrichtung 116 in Spanförderrichtung 122 gesehen eine Neigung in Richtung nach unten von dem rückwärtigen Ende 30 hin zu dem vorderen Ende 28 des Maschinenbetts 104 auf. Die Entsorgung der Späne erfolgt bei der in Figur 9b dargestellten Werkzeugmaschinenvorrichtung 116 nicht im Bereich des rückwärtigen Endes 30 (vgl. Figur 9a), sondern im Bereich des vorderen Endes 28 des Maschinenbetts 104. Dementsprechend weist die Werkzeugmaschinenvorrichtung 116 im Unterschied zu der Werkzeugmaschinenvorrichtung 114 keine Abdeckung 108 im Bereich des Durchlasses 40 auf.

Auch bei der Verwendung separater Begrenzungselemente 124 kann das Maschinenbett 104 mit einer Absaugeinrichtung 82 (siehe Figur 9c) und/oder mit einer Spüleinrichtung 96 (siehe Figur 9d) ausgerüstet werden.

## Patentansprüche

1. Werkzeugmaschinenvorrichtung, umfassend ein Maschinenbett (12; 104) mit mindestens einem Aufnahmeraum (36, 38) zur Aufnahme von bei der Bearbeitung eines Werkstücks entstehenden Spänen und mindestens eine Abführeinrichtung (66) zum Abführen der Späne aus dem Aufnahmeraum (36, 38), **dadurch gekennzeichnet, dass** die mindestens eine Abführeinrichtung (66) mindestens eine Fördereinrichtung (68) zum Fördern der Späne aus dem Aufnahmeraum (36, 38) und/oder mindestens eine Spüleinrichtung (96) zum Spülen der Späne aus dem Aufnahmeraum (36, 38) und/oder mindestens eine Absaugeinrichtung (82) zum Absaugen der Späne aus dem Aufnahmeraum (36, 38) umfasst, und dass das Maschinenbett (12; 104) mindestens einen ersten Maschinenbettabschnitt (58) zur Anordnung der Fördereinrichtung (68), mindestens einen zweiten Maschinenbettabschnitt (60) zur Anordnung der Spüleinrichtung (96) und mindestens einen dritten Maschinenbettabschnitt (62) zur Anordnung der Absaugeinrichtung (82) umfasst, so dass das Maschinenbett (12; 104) wahlweise mit der Fördereinrichtung (68) und/oder der Spüleinrichtung (96) und/oder der Absaugeinrichtung (82) ausrüstbar ist.

2. Werkzeugmaschinenvorrichtung nach Anspruch 1, **dadurch gekennzeichnet, dass** der erste Maschinenbettabschnitt (58) den Aufnahmeraum (36, 38) umfasst.

3. Werkzeugmaschinenvorrichtung nach einem der vorhergehenden Ansprüche, **dadurch gekennzeichnet, dass** eine bodenseitige Begrenzung (52) des Aufnahmeraums (36, 38) gegenüber einer Aufstellebene des Maschinenbetts (12; 104) geneigt ist.

4. Werkzeugmaschinenvorrichtung nach einem der vorhergehenden Ansprüche, **dadurch gekennzeichnet, dass** der erste Maschinenbettabschnitt (58) mindestens einen Durchlass (40, 42) umfasst, mittels welchem der Aufnahmeraum (36, 38) mit einer Umgebung der Werkzeugmaschinenvorrichtung (64; 80; 102; 110; 112; 114; 116; 118; 120) verbunden ist, und insbesondere, dass die Fördereinrichtung (68) über den Durchlass (40, 42) in den Aufnahmeraum (36, 38) einführbar ist.

5. Werkzeugmaschinenvorrichtung nach einem der vorhergehenden Ansprüche, **dadurch gekennzeichnet, dass** die Fördereinrichtung (68) mindestens eine Förderschnecke (70) umfasst.

6. Werkzeugmaschinenvorrichtung nach einem der vorhergehenden Ansprüche, **dadurch gekennzeichnet, dass** die Fördereinrichtung (68) mindestens ein Förderband (76) umfasst.

7. Werkzeugmaschinenvorrichtung nach einem der vorhergehenden Ansprüche, **gekennzeichnet durch** mindestens eine Antriebseinrichtung (72) zum Antrieb der Fördereinrichtung (68), und insbesondere, dass die Antriebseinrichtung (72) an dem Maschinenbett (12; 104) anordenbar ist.

8. Werkzeugmaschinenvorrichtung nach einem der vorhergehenden Ansprüche, **dadurch gekennzeichnet, dass** der zweite Maschinenbettabschnitt (60) mindestens ein Wandelement (46, 48) umfasst, welches den Aufnahmeraum (36, 38) begrenzt, und insbesondere, dass mittels des Wandelements (46, 48) das Maschinenbett (12; 104) versteift ist.

9. Werkzeugmaschinenvorrichtung nach einem der vorhergehenden Ansprüche, **dadurch gekennzeichnet, dass** die Spüleinrichtung (96) mindestens eine Düse (98) zum Einbringen mindestens eines Spülfluids in den Aufnahmeraum (36, 38) umfasst, und insbesondere, dass das Spülfluid eine Flüssigkeit ist, und insbesondere, dass das Spülfluid Druckluft ist.

10. Werkzeugmaschinenvorrichtung nach einem der vorhergehenden Ansprüche, **dadurch gekennzeichnet, dass** der dritte Maschinenbettabschnitt (62) den Aufnahmeraum (36, 38) umfasst.

11. Werkzeugmaschinenvorrichtung nach einem der vorhergehenden Ansprüche, **dadurch gekennzeichnet, dass** der dritte Maschinenbettabschnitt (62) einen in das Maschinenbett (12; 104) integrierten Zusatzraum (56) umfasst, und insbesondere, dass mindestens ein Durchtritt (90) zur Verbindung des Aufnahmeraums (36, 38) und des Zusatzraums (56) vorgesehen ist, und insbesondere, dass der Aufnahmeraum (36, 38) und der Zusatzraum (56) sich in zueinander parallelen Richtungen erstrecken, und insbesondere, dass der Aufnahmeraum (36, 38) bezogen auf die Schwerkraftrichtung oberhalb des Zusatzraums (56) angeordnet ist.

12. Werkzeugmaschinenvorrichtung nach einem der vorhergehenden Ansprüche, **dadurch gekennzeichnet, dass** die Absaugeinrichtung (82) mindestens ein in den Aufnahmeraum (36, 38) einsetzbares Spanführungselement (84) umfasst, und insbesondere, dass das Spanführungselement (84) trichterförmig ist.

13. Werkzeugmaschinenvorrichtung nach einem der vorhergehenden Ansprüche, **dadurch gekennzeichnet, dass** die Absaugeinrichtung (82) mindestens eine mit dem Aufnahmeraum (36, 38) in Fluidverbindung stehende Absaugleitung (92) umfasst, und insbesondere, dass die Querschnittsfläche der Absaugleitung (92) in einer Spanabsaugrichtung (94) gesehen zunimmt.

14. Werkzeugmaschine mit einer Werkzeugmaschinenvorrichtung (64; 80; 102; 110; 112; 114; 116; 118; 120) nach einem der vorhergehenden Ansprüche, und insbesondere, dass der mindestens eine Aufnahmeraum (36, 38) mindestens so lang ist wie ein Arbeitsraum (26) der Werkzeugmaschine (10), und insbesondere, dass die Werkzeugmaschine (10) eine Mehrzahl von an dem Maschinenbett (12; 104) beweglich geführten Schlitten (20, 24) zur Halterung mindestens eines Werkstücks und/oder mindestens eines Werkzeugs umfasst, dass jedem Schlitten (20, 24) mindestens ein eigener Aufnahmeraum (36, 38) zugeordnet ist und dass jedem Aufnahmeraum (36, 38) mindestens eine eigene Abführeinrichtung (66) zugeordnet ist.

15. Verfahren zur Herstellung einer Werkzeugmaschinenvorrichtung (64; 80; 102; 110; 112; 114; 116; 118; 120), umfassend ein Maschinenbett (12; 104) mit mindestens einem Aufnahmeraum (36, 38) zur Aufnahme von bei der Bearbeitung eines Werkstücks entstehenden Spänen, **dadurch gekennzeichnet, dass** mindestens eine Fördereinrichtung (68) zum Fördern der Späne aus dem Aufnahmeraum (36, 38), mindestens eine Spüleinrichtung (96) zum Spülen der Späne aus dem Aufnahmeraum (36, 38) und mindestens eine Absaugeinrichtung (82) zum Absaugen der Späne aus dem Aufnahmeraum (36, 38) bereitgestellt werden, und dass das Maschinenbett (12; 104) wahlweise mit der Fördereinrichtung (68) und/oder der Spüleinrichtung (96) und/oder der Absaugeinrichtung (82) ausgerüstet wird.

## Claims

1. Machine tool device, comprising a machine bed (12; 104) with at least one receiving area (36, 38) for receiving chips produced during the machining of a workpiece, and at least one discharging device (66) for discharging the chips from the receiving area (36,38), **characterized in that** the at least one discharging device (66) comprises at least one conveying device (68) for conveying the chips from the receiving area (36, 38) and/or at least one flushing device (96) for flushing the chips out of the receiving area (36, 38) and/or at least one suction device (82) for evacuating the chips from the receiving area (36, 38) by suction, and **in that** the machine bed (12; 104) comprises at least one first machine bed section (58) for the arrangement of the conveying device (68), at least one second machine bed section (60) for the arrangement of the flushing device (96) and at least one third machine bed section (62) for the arrangement of the suction device (82), so that the machine bed (12; 104) is adapted for selective equipment with the conveying device (68) and/or the flushing device (96) and/or the suction device (82).

2. Machine tool device in accordance with claim 1, **characterized in that** the first machine bed section (58) comprises the receiving area (36, 38).

3. Machine tool device in accordance with any one of the preceding claims, **characterized in that** a bottom delimitation (52) of the receiving area (36, 38) is inclined in relation to an installation plane of the machine bed (12; 104).

4. Machine tool device in accordance with any one of the preceding claims, **characterized in that** the first machine bed section (58) comprises at least one aperture (40, 42) by means of which the receiving area (36, 38) is connected with an environment of the machine tool device (64; 80; 102; 110; 112; 114; 116; 118; 120), and, in particular, **in that** the conveying device (68) is adapted for insertion via the aperture (40, 42) into the receiving area (36, 38).

5. Machine tool device in accordance with any one of the preceding claims, **characterized in that** the conveying device (68) comprises at least one screw conveyor (70).

6. Machine tool device in accordance with any one of the preceding claims, **characterized in that** the conveying device (68) comprises at least one conveyor belt (76).

7. Machine tool device in accordance with any one of the preceding claims, **characterized by** at least one drive device (72) for driving the conveying device (68), and, in particular, in that the drive device (72) is adapted for arrangement on the machine bed (12; 104).

8. Machine tool device in accordance with any one of the preceding claims, **characterized in that** the second machine bed section (60) comprises at least one wall element (46, 48) which delimits the receiving area (36, 38), and, in particular, **in that** the machine bed (12; 104) is reinforced by the wall element (46, 48).

9. Machine tool device in accordance with any one of the preceding claims, **characterized in that** the flushing device (96) comprises at least one nozzle (98) for introducing at least one flushing fluid into the receiving area (36, 38), and, in particular, **in that** the flushing fluid is a liquid, and, in particular, **in that** the flushing fluid is compressed air.

10. Machine tool device in accordance with any one of the preceding claims, **characterized in that** the third machine bed section (62) comprises the receiving area (36, 38).

11. Machine tool device in accordance with any one of the preceding claims, **characterized in that** the third machine bed section (62) comprises an additional area (56) which is integrated into the machine bed (12; 104), and, in particular, **in that** at least one passage (90) is provided for connection of the receiving area (36, 38) and the additional area (56), and, in particular, **in that** the receiving area (36, 38) and the additional area (56) extend in directions parallel to each other, and, in particular, **in that** the receiving area (36, 38) is arranged above the additional area (56) in relation to the direction of gravity.

12. Machine tool device in accordance with any one of the preceding claims, **characterized in that** the suction device (82) comprises at least one chip guiding element (84) which is adapted for insertion into the receiving area (36, 38), and, in particular, **in that** the chip guiding element (84) is funnel-shaped.

13. Machine tool device in accordance with any one of the preceding claims, **characterized in that** the suction device (82) comprises at least one suction line (92) which is in fluidic connection with the receiving area (36, 38), and, in particular, **in that** the cross-sectional area of the suction line (92), seen in a direction (94) of chip evacuation by suction, increases.

14. Machine tool with a machine tool device (64; 80; 102; 110; 112; 114; 116; 118; 120) in accordance with any one of the preceding claims, and, in particular, **characterized in that** the at least one receiving area (36, 38) is at least of the same length as a working area (26) of the machine tool (10), and, in particular, **in that** the machine tool (10) comprises a plurality of slides (20, 24) movably guided on the machine bed (12; 104) for holding at least one workpiece and/or at least one tool, **in that** each slide (20, 24) has at least one receiving area (36, 38) of its own associated with it, and **in that** each receiving area (36, 38) has at least one discharging device (66) of its own associated with it.

15. Method of manufacturing a machine tool device (64; 80; 102; 110; 112; 114; 116; 118; 120), comprising a machine bed (12; 104) with at least one receiving area (36, 38) for receiving chips produced during the machining of a workpiece, **characterized in that** at least one conveying device (68) for conveying the chips out of the receiving area (36, 38), at least one flushing device (96) for flushing the chips out of the receiving area (36, 38) and at least one suction device (82) for evacuating the chips out of the receiving area (36, 38) by suction are provided, and **in that** the machine bed (12; 104) is selectively equipped with the conveying device (68) and/or the flushing device (96) and/or the suction device (82).

## Revendications

1. Système de machine-outil, comprenant un banc de machine (12 ; 104) avec au moins un espace de réception (36, 38) pour la réception des copeaux formés lors de l'usinage d'une pièce et au moins un dispositif d'évacuation (66) pour l'évacuation des copeaux hors de l'espace de réception (36, 38), **caractérisé en ce que** le ou les dispositifs d'évacuation (66) comprennent au moins un dispositif de transport (68) pour le transport des copeaux hors de l'espace de réception (36, 38) et/ou au moins un dispositif de rinçage (96) pour le rinçage des copeaux hors de l'espace de réception (36, 38) et/ou au moins un dispositif d'aspiration (82) pour l'aspiration des copeaux hors de l'espace de réception (36, 38), et **en ce que** le banc de machine (12 ; 104) comprend au moins une première partie de banc de machine (58) destinée à l'agencement du dispositif de transport (68), au moins une deuxième partie de banc de machine (60) destinée à l'agencement du dispositif de rinçage (96) et au moins une troisième partie de banc de machine (62) destinée à l'agencement du dispositif d'aspiration (82), de telle manière que le banc de machine (12 ; 104) peut être équipé au choix du dispositif de transport (68) et/ou du dispositif de rinçage (96) et/ou du dispositif d'aspiration (82).

2. Système de machine-outil selon la revendication 1, **caractérisé en ce que** la première partie de banc de machine (58) comprend l'espace de réception (36, 38).

3. Système de machine-outil selon l'une des revendications précédentes, **caractérisé en ce qu'**une délimitation de fond (52) de l'espace de réception (36, 38) est inclinée par rapport à un plan de montage du banc de machine (12 ; 104).

4. Système de machine-outil selon l'une des revendications précédentes, **caractérisé en ce que** la première partie de banc de machine (58) comprend au moins un passage (40, 42) par lequel l'espace de réception (35, 38) est relié à un environnement du système de machine-outil (64 ; 80 ; 102 ; 110 ; 112 ; 114 ; 116 ; 118 ; 120), et en particulier **en ce que** le dispositif de transport (68) peut être introduit par le passage (40, 42) dans l'espace de réception (36, 38).

5. Système de machine-outil selon l'une des revendications précédentes, **caractérisé en ce que** le dispositif de transport (68) comprend au moins une vis sans fin (70).

6. Système de machine-outil selon l'une des revendications précédentes, **caractérisé en ce que** le dispositif de transport (68) comprend au moins une bande transporteuse (76).

7. Système de machine-outil selon l'une des revendications précédentes, **caractérisé par** au moins un dispositif d'entraînement (72) pour l'entraînement du dispositif de transport (68), et en particulier en ce que le dispositif d'entraînement (72) peut être disposé sur le banc de machine (12 ; 104).

8. Système de machine-outil selon l'une des revendications précédentes, **caractérisé en ce que** la deuxième partie de banc de machine (60) comprend au moins un élément de paroi (46, 48) délimitant l'espace de réception (36, 38), et en particulier **en ce que** la rigidité du banc de machine (12 ; 104) est rigidifiée au moyen de l'élément de paroi (46, 48).

9. Système de machine-outil selon l'une des revendications précédentes, **caractérisé en ce que** le dispositif de rinçage (96) comprend au moins une buse (98) pour l'apport d'au moins un fluide de rinçage dans l'espace de réception (36, 38), et en particulier **en ce que** la fluide de rinçage est un liquide, et en particulier **en ce que** le fluide de rinçage est de l'air comprimé.

10. Système de machine-outil selon l'une des revendications précédentes, **caractérisé en ce que** la troisième partie de banc de machine (62) comprend l'espace de réception (36, 38).

11. Système de machine-outil selon l'une des revendications précédentes, **caractérisé en ce que** la troisième partie de banc de machine (62) comprend un espace additionnel (56) intégré au banc de machine (12 ; 104), et en particulier **en ce qu'**il est prévu au moins un passage (90) pour relier l'espace de réception (36, 38) et l'espace additionnel (56), et en particulier **en ce que** l'espace de réception (36, 38) et l'espace additionnel (56) s'étendent dans des directions parallèles l'une à l'autre, et en particulier **en ce que** l'espace de réception (36, 38) est disposé au-dessus de l'espace additionnel (56) par rapport à la direction de la gravité.

12. Système de machine-outil selon l'une des revendications précédentes, **caractérisé en ce que** le dispositif d'aspiration (82) comprend au moins un élément de guidage des copeaux (84) pouvant être mis en place dans l'espace de réception (36, 38), et en particulier **en ce que** l'élément de guidage des copeaux (84) est en forme d'entonnoir.

13. Système de machine-outil selon l'une des revendications précédentes, **caractérisé en ce que** le dispositif d'aspiration (82) comprend au moins une conduite d'aspiration (92) en liaison fluidique avec l'espace de réception (36, 38), et en particulier **en ce que** la surface de section transversale de la conduite d'aspiration (92) augmente dans la direction d'aspiration des copeaux (94).

14. Machine-outil avec un système de machine-outil (64 ; 80 ; 102 ; 110 ; 112 ; 114 ; 116 ; 118 ; 120) selon l'une des revendications précédentes, **caractérisée en ce que** le ou les espaces de réception (36, 38) sont au moins aussi longs qu'un espace de travail (26) de la machine-outil (10), et en particulier **en ce que** la machine-outil (10) comprend une pluralité de chariots (20, 24) mobiles guidés sur le banc de machine (12 ; 104) pour le maintien d'au moins une pièce et/ou d'au moins un outil, **en ce qu'**à chaque chariot (20, 24) est affecté au moins un espace de réception propre (36, 38), et **en ce qu'**à chaque espace de réception (36, 38) est affecté au moins un dispositif d'évacuation propre (66).

15. Procédé de fabrication d'un système de machine-outil (64 ; 80 ; 102 ; 110 ; 112 ; 114 ; 116 ; 118 ; 120), comprenant un banc de machine (12 ; 104) avec au moins un espace de réception (36, 38) pour la réception des copeaux formés lors de l'usinage d'une pièce, **caractérisé en ce que** sont prévus au moins un dispositif de transport (68) pour le transport des copeaux hors de l'espace de réception (36, 38), au moins un dispositif de rinçage (96) pour le rinçage des copeaux hors de l'espace de réception (36, 38) et au moins un dispositif d'aspiration (82) pour l'aspiration des copeaux hors de l'espace de réception (36, 38), et **en ce que** le banc de machine (12 ; 104) est équipé au choix du dispositif de transport (68) et/ou du dispositif de rinçage (96) et/ou du dispositif d'aspiration (82).
